# EUROPÄISCHE PATENTSCHRIFT

(11) **EP 3 367 285 B1**
(45) Veröffentlichungstag und Bekanntmachung des Hinweises auf die Patenterteilung: **30.06.2021**
(21) Anmeldenummer: 18155308.2
(22) Anmeldetag: 06.02.2018
(51) Int. Cl.: G06F 21/34, G06F 21/60, H04L 9/08, H04W 12/02, H04L 29/08, H04W 4/80, H04L 9/32, H04L 29/06

(54) **TERMINAL, ID-TOKEN, COMPUTERPROGRAMM UND ENTSPRECHENDE VERFAHREN ZUR AUTHENTISIERUNG EINER ZUGANGSBERECHTIGUNG**
TERMINAL, ID-TOKEN, COMPUTER PROGRAM AND CORRESPONDING METHODS FOR AUTHENTICATING ACCESS AUTHORIZATION
TERMINAL, ID-TOKEN, PROGRAMME INFORMATIQUE ET PROCÉDÉS CORRESPONDANTES D'AUTHENTIFICATION D'UNE AUTORISATION D'ACCÈS

(30) Priorität: 23.02.2017 DE 102017202952
(43) Veröffentlichungstag der Anmeldung: 29.08.2018
(73) Patentinhaber: Bundesdruckerei GmbH, 10969 Berlin (DE)
(72) Erfinder: Morgner, Frank, 15537 Grünheide (DE); Bastian, Paul, 10243 Berlin (DE); Kraus, Micha, 10827 Berlin (DE)
(74) Vertreter: Glawe, Delfs, Moll

(56) Entgegenhaltungen:
- DE-A1-102015 202 308
- US-A1- 2011 170 692
- RENÉ HUMMEN ET AL: "Towards viable certificate-based authentication for the internet of things", HOT TOPICS ON WIRELESS NETWORK SECURITY AND PRIVACY, ACM, 2 PENN PLAZA, SUITE 701 NEW YORK NY 10121-0701 USA, 19. April 2013 (2013-04-19), Seiten 37-42, XP058015417, DOI: 10.1145/2463183.2463193 ISBN: 978-1-4503-2003-0

## Beschreibung

### Technisches Gebiet

Die vorliegende Erfindung betrifft eine Zugangskontrollvorrichtung und ein Verfahren zur Authentisierung einer Zugangsberechtigung.

### Beschreibung des Standes der Technik

Verfahren zur Authentisierung, d.h. zur Überprüfung der Identität und Authentizität eines Kommunikationspartners, sowie zur Durchführung derartiger Verfahren geeignete Zugangskontrollsysteme sind bekannt.

So ist aus der DE 10 2015 202 308 A1 ein Zugangsverfahren zur Aushandlung eines verschlüsselten Kanals, der für die Zugangskontrolle benutzt wird, bekannt. In dem bekannten Verfahren werden unter Verwendung von jeweiligen asymmetrischen Schlüsseln ausgehandelte symmetrische Sitzungsschlüssel in einem Terminal des Zugangskontrollsystems einerseits und in dem ID-Token (Zugriffstoken) andererseits persistent gespeichert und bei der nächsten Kommunikation erneut verwendet. Hierzu gibt sich der Zugriffstoken bei der nächsten physischen Sitzung mittels seiner eindeutigen Kennung (UID: Unique ID) gegenüber dem Terminal zu erkennen, welches den alten symmetrischen Sitzungsschlüssel anhand der UID aus seinem Speicher ermittelt und verwendet. Der Zugriffstoken seinerseits kann den entsprechenden Schlüssel anhand der eindeutigen Terminal-Kennung aus seinem Speicher laden.

Das Dokument "Towards viable certificate-based authentication for the internet of things" (Rene Hummen et al.) betrifft eine Overhead-reduzierte Authentisierung eines Clients an einem Server im Rahmen eines zertifikatbasierten DTLS-Handshakes, wobei auch Sitzungswiederherstellung betrachtet wird. Dabei wird der Session-State serverseitig gespeichert.

### Zusammenfassung der Erfindung

Ausgehend hiervon werden erfindungsgemäß ein Verfahren zur Authentisierung einer Zugangsberechtigung mit den Merkmalen der Ansprüche 1, 3 und 5, ein ID-Token mit den Merkmalen des Anspruchs 14, ein Terminal mit den Merkmalen des Anspruchs 15 sowie ein Computerprogramm mit den Merkmalen des Anspruchs 13 vorgeschlagen.

Die Erkenntnis der Erfindung liegt darin begründet, auf dem ID-Token eine Verschlüsselung eines Sitzungskontextes vorzunehmen und den verschlüsselten Sitzungskontext zur Speicherung an das Terminal des Zugangskontrollsystems zu senden, ohne dass der ID-Token wie im Stand der Technik den Sitzungskontext (Sitzungsschlüssel) selbst speichert. Zu diesem Zwecke kann auf dem ID-Token ein Geheimnis bzw. einen Schlüssel vorgesehen sein. Das erfindungsgemäße Vorgehen eröffnet die Möglichkeit, einen gegebenen ID-Token für eine Vielzahl von Fällen, d.h. in Zusammenhang mit einer Vielzahl von Terminals eines Zugangskontrollsystems oder mehreren Zugangskontrollsystemen, zum Aufbau von Sitzungen bzw. Kommunikationskanälen zu verwenden, ohne dass der auf dem ID-Token zur Verfügung stehende Speicher eine Begrenzung darstellen würde, wie dies bei der bekannten Speicherung vollständiger und vergleichsweise speicherintensiver Schlüssel der Fall ist.

Zur Wiederherstellung einer Sitzung zwischen dem Terminal und dem ID-Token ermittelt das Terminal auf Anfrage des ID-Tokens den zugehörigen verschlüsselten Sitzungskontext, um diesen an den ID-Token zu senden, sowie den eigenen Sitzungskontext, um diesen zur Erstellung eines Kommunikationskanals zu laden.

Zur eindeutigen Zuordnung eines verschlüsselten Sitzungskontextes kann dieser im Speicher des Terminals einem Attribut des ID-Tokens zugeordnet gespeichert werden.

Das Attribut des ID-Tokens kann bspw. eine eindeutige Kennung (Unique ID) des ID-Tokens sein. Alternativ kann es sich bei dem Attribut des ID-Tokens um eine randomisierte Kennung handeln.

Zur Wiederherstellung einer Sitzung zwischen dem Terminal und dem ID-Token sendet der ID-Token dem Terminal eine Anfrage, bspw. durch Zusenden des Attributs. Das Terminal kann anhand der (eindeutigen) Anfrage den zugehörigen verschlüsselten Sitzungskontext ermitteln und an den ID-Token senden. Zudem lädt das Terminal den eigenen zugehörigen Sitzungskontext.

Gemäß einer Weiterbildung der Erfindung wird zur Vermeidung gefälschter Terminalanfragen auf die Verwendung einer eindeutigen Token-Kennung verzichtet und stattdessen ein sitzungsspezifisches randomisiertes Attribut erzeugt, das in dem Terminal unter Zuordnung zu dem verschlüsselten Sitzungskontext gespeichert wird. In dem ID-Token wird im Gegenzug dieses randomisierte Attribut unter Zuordnung zu einer eindeutigen Terminal-Kennung gespeichert. Das randomisierte Attribut kann bspw. basierend auf einem Sendefolgezähler generiert werden. Auf diese Art und Weise ist dem ID-Token keine unveränderliche eindeutige Kennung mehr zugeordnet, sondern die Kennung ist sitzungsspezifisch und ändert sich somit von einer physischen Sitzung zur nächsten. Das heißt, dass bei derartigen Ausführungsformen der Erfindung der ID-Token und das Terminal in einer jeweiligen physischen Sitzung verabreden, unter Verwendung welchen randomisierten Attributs sich der ID-Token dem Terminal bei der nächsten physischen Sitzung zu erkennen geben wird. Da dies verschlüsselt vollzogen wird, scheidet eine Nachverfolgung des ID-Tokens somit aus. Dies bedeutet, dass eine logische Sitzung zwischen den Sitzungspartnern in einer späteren, neu hergestellten physischen Sitzung fortgesetzt werden kann.

Zur Wiederherstellung der Sitzung zwischen dem Terminal und dem ID-Token bei Verwendung eines randomisierten Attributs sendet zunächst das Terminal seine eindeutige Terminal-Kennung an den ID-Token, der aus seinem Speicher das zu der eindeutigen Terminal-Kennung passende randomisierte Attribut ermittelt. Das ermittelte randomisierte Attribut wird - wie bereits voranstehend beschrieben - dann als Anfrage an das Terminal gesendet, und das weitere Verfahren zur Wiederherstellung der Sitzung läuft dann wie bereits beschrieben ab. Das randomisierte Attribut belegt deutlich weniger Speicher im ID-Token als es der vollständige Sitzungskontext täte, so dass auch bei solchen Ausführungsformen der Erfindung eine vorteilhafte Entlastung der Speicherkapazität des ID-Tokens erreicht wird.

Erfindungsgemäß ist auf dem ID-Token keine gespeicherte Information zu der Sitzung mehr vorhanden (wenn man von dem ggf. vorhandenen sitzungsspezifisch erzeugten randomisierten Attribut absieht), wodurch eine sogenannte Replay-Attacke möglich wird. Unter einer Replay-Attacke wird das Aufzeichnen von Antworten eines legitimen Terminals im Rahmen einer physischen Sitzung durch einen abhörenden Dritten verstanden, um diese Informationen zu einem späteren Zeitpunkt dem ID-Token unter Vortäuschung einer gewünschten Terminalverbindung zu präsentieren. Um eine derartige Attacke auszuschließen, kann der verschlüsselte Sitzungskontext erfindungsgemäß ein randomisiertes Element umfassen. Das randomisierte Element kann bspw. ein Sendefolgezähler sein, der zu Beginn jeder (physischen) Sitzung neu initialisiert wird. Die Initialisierung des Sendefolgezählers kann dabei auf einer Zufallszahl erfolgen. Zur Erhöhung der Sicherheit kann die Zufallszahl aus einer auf dem ID-Token generierten ersten Zufallszahl und aus einer auf dem Terminal generierten zweiten Zufallszahl zusammengesetzt sein, so dass beide Parteien sicher sein können, dass der Sendefolgezähler tatsächlich mit zufälligen Werten initialisiert wird. Die jeweils erzeugten Zufallszahlen können im Klartext mit der Gegenseite ausgetauscht werden. Ein Dritter kann aus der Kenntnis der ausgetauschten Zufallszahlen keine Rückschlüsse auf die nachfolgende Kommunikation ziehen, da in die Initialisierung der für den zwischen ID-Token und Terminal wiederherzustellenden sicheren Kanal verwendeten kryptographischen Funktion neben dem Sendefolgezähler das geheime Schlüsselmaterial eingeht. Auf diese Weise wird sichergestellt, dass die nachfolgend ausgetauschten Kryptogramme trotz möglicherweise identischen Inhalts in jeder physischen Sitzung auf für den Dritten zufällig erscheinende Weise variieren. Aus diesem Grund kann der Angreifer aber auch kein aufgezeichnetes Kryptogramm für eine Replay-Attacke verwenden, weil die Parteien dies wegen des unpassenden (veralteten) Sendefolgezählers erkennen würden.

Die vorliegende Beschreibung deckt auch ein Computerprogramm mit Programmcode ab, der dazu geeignet ist, ein erfindungsgemäßes Verfahren auszuführen, wenn das Computerprogramm auf ID-Token bzw. einem Terminal eines Zugangskontrollsystems abläuft. Es werden sowohl das Computerprogramm selbst als auch abgespeichert auf einem computerlesbaren Medium (Computerprogrammprodukt) beansprucht.

Die Erfindung wird durch den Gegenstand der beigefügten Ansprüche definiert.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

Figur 1 zeigt in stark schematische Blockdarstellung ein erfindungsgemäßes Zugangskontrollsystem.

Figur 2 zeigt stark schematisiert einen Ablaufplan (Flussdiagramm) eines erfindungsgemäßen Verfahrens.

Figur 3 zeigt stark schematisiert einen Ablaufplan (Flussdiagramm) eines erfindungsgemäßen Verfahrens zur Wiederherstellung einer Sitzung zwischen den Sitzungsteilnehmern des Ablaufs der Figur 2.

### Ausführliche Beschreibung

Gleiche und ähnliche in den einzelnen Figuren dargestellte Merkmale sind mit gleichen Bezugszeichen bezeichnet.

Im Sinne der vorliegenden Erfindung bezeichnet der Begriff "ID-Token" eine Vorrichtung, wie beispielsweise ein tragbares elektronisches Gerät, zum Beispiel einen sogenannten USB-Stick, oder ein Dokument, insbesondere ein Wert- oder Sicherheitsdokument. Unter einem "Dokument" werden papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Unter einem "Attribut" wird im folgenden ein Datenwert, zum Beispiel eine Zahl oder ein Text, verstanden.

Ein Zugangskontrollsystem bezeichnet im Rahmen der vorliegenden Beschreibung eine Einrichtung bzw. Vorrichtung, die den Zugang zu bestimmten räumlichen Bereichen oder auch den Zugriff auf bestimmte Daten kontrolliert. Ein Zugriff ist nur nach Nachweis einer entsprechenden Berechtigung mittels des ID-Tokens möglich.

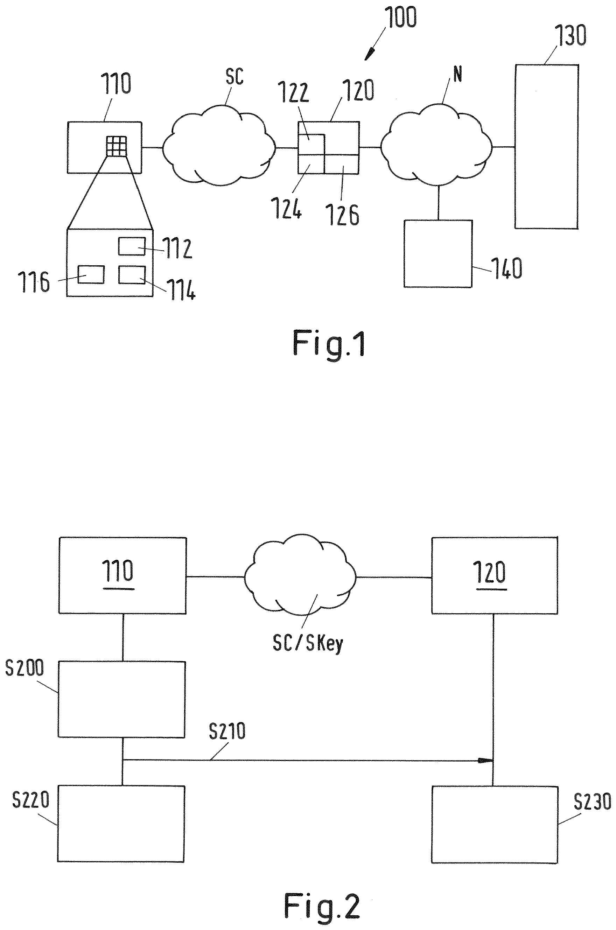

Figur 1 zeigt in stark schematisierter Blockdarstellung ein erfindungsgemäßes Zugangskontrollsystem bzw. eine Zugangskontrollvorrichtung 100. Das Zugangskontrollsystem umfasst einen ID-Token 110 und ein Terminal 120, das über ein Netzwerk N mit einer Sicherungsanlage 140 verbunden ist.

Der ID-Token 110 umfasst eine Kommunikationsschnittstelle 112, einen Prozessor 114 und einen Speicher 116. In ähnlicher Weise umfasst das Terminal 120 eine Kommunikationsschnittstelle 122, einen Prozessor 124 und einen Speicher 126. Der ID-Token 110 und das Terminal 120 sind dazu ausgebildet, mittels ihrer Kommunikationsschnittstellen 112, 122 unter Ausbildung eines gesicherten Kommunikationskanals SC miteinander zu kommunizieren.

Die Kommunikation zwischen dem ID-Token 110 und dem Terminal 120 kann drahtgebunden oder drahtlos durchgeführt werden, bspw. kann es sich um eine Nahfeldkommunikation mittels RFID, WLAN oder dergleichen handeln. Ebenso können der ID-Token 110 und das Terminal 120 über ein Kommunikationsnetzwerk kommunizieren, beispielsweise über dasjenige, mittels welchem das Terminal 120 mit der Sicherungsanlage 140 verbunden ist. Jedes Netzwerk kann drahtgebunden oder drahtlos ausgebildet sein.

Die Sicherungsanlage 140 kann bspw. zur Sicherung des Zugriffs auf oder Zutritt in einen sensitiven Bereich dienen. Dabei kann es sich um einen räumlichen Bereich handeln, in welchem Falle die Sicherungsanlage bspw. als Schließsystem ausgebildet ist, oder es kann sich um einen Datenbereich (Datenbankzugriff) handeln, zu welchem die Sicherungsanlage den Zugriff kontrolliert.

Der ID-Token 110 dient als "Schlüssel", um den Zutritt zu der Sicherungsanlage zu erlangen.

Das Terminal 120 kann darüber hinaus - wie in dem Ausführungsbeispiel der Figur 1 dargestellt - mit einem Server bzw. Host-Computer 130 verbunden sein, um gegebenenfalls auf zentrale Daten, die im Zusammenhang mit der Authentisierung und/oder der Kommunikation mit dem ID-Token 110 erforderlich sind, zugreifen zu können.

Die Ausgestaltung der Funktionsmodule (Prozessor, Schnittstelle, Speicher) des ID-Tokens 110 wird im folgenden nicht genauer beschrieben, da diese im Bereich des fachmännischen Könnens liegt. So ist es dem Fachmann bspw. ohne weiteres geläufig, bei der Gestaltung des Speichers 116 des ID-Tokens 110 auf die üblicherweise verwendeten Speicherarten (RAM, ROM, EEPROM) zurückzugreifen.

Figur 2 veranschaulicht den Ablauf des erfindungsgemäßen Vorgehens. Die Darstellung des Verfahrensablaufs der Figur 2 beginnt zu einem Zeitpunkt, zu dem zwischen dem ID-Token 110 und dem Terminal 120 bereits ein gesicherter Kommunikationskanal SC eingerichtet ist. Die Etablierung des gesicherten Kommunikationskanals SC kann in einer dem Fachmann an sich bekannten Art und Weise erfolgen. Insbesondere kann die Etablierung des gesicherten Kommunikationskanals SC unter Aushandlung eines gemeinsamen (symmetrischen) Sitzungsschlüssels SKey ausgehend von jeweiligen asymmetrischen Schlüsselpaaren wie bspw. aus der DE 10 2015 202 308 A1 bekannt erfolgen.

In einem Schritt S200 verschlüsselt der ID-Token 110 anhand des in dem ID-Token hinterlegten Schlüssels bzw. Geheimnisses den eigenen Sitzungskontext KSK und erzeugt dadurch den verschlüsselten Sitzungskontext CKS = Enc[KSK]. In einem nächsten Schritt S210 sendet der ID-Token 110 den verschlüsselten Sitzungskontext KSK zusammen mit einem Token-Attribut KID an das Terminal 120. Das Terminal 120 speichert den empfangenen verschlüsselten Sitzungskontext CKS zusammen mit dem Token-Attribut KID und dem eigenen Sitzungskontext TSK in seinem Speicher 126 (Schritt S230).

Bei dem Token-Attribut KID kann es sich bspw. um die eindeutige Kennung KUID des ID-Tokens oder auch ein anderes den ID-Token identifizierendes Attribut handeln. Der ID-Token 110 speichert in diesem Fall außer dem eigenen Attribut KID (das ohnehin in dem ID-Token fest hinterlegt ist) nichts ab. In einem Schritt S220 wird der eigene Sitzungskontext KSK und der an das Terminal übermittelte verschlüsselte Sitzungskontext CKS gelöscht.

Ein Sitzungskontext stellt im Rahmen der vorliegenden Erfindung eine Sammlung von Daten dar, die benötigt werden, um einen sicheren Sitzungskanal SC bzw. eine sichere Sitzung sicher wiederherzustellen, und umfasst zumindest den gemeinsamen Sitzungsschlüssel und ggf. die eindeutige Terminal-Kennung TUID. Weitere Daten oder Geheimnisse der sicheren Sitzung können enthalten sein, wie bspw. ein asymmetrischer Schlüssel.

Wie bereits voranstehend beschrieben kann es sich bei dem Token-Attribut KID zur Vermeidung einer Nachverfolgbarkeit des ID-Tokens erfindungsgemäß um ein sitzungsspezifisch randomisiertes Attribut RID handeln. In diesem Fall umfasst der Schritt S200 neben der Erzeugung des verschlüsselten Sitzungskontextes CKS = Enc[KSK] auch die Berechnung des randomisierten Attributs RID, bei dem es sich um eine Zufalls-ID der gemeinsamen Sitzung zwischen dem ID-Token 110 und dem Terminal 120 handelt. Das randomisierte Attribut kann bspw. auch als "One-Time Session Identifier" bezeichnet werden.

Erfindungsgemäß wird das randomisierte Attribut als Zufalls-Code (Hash) aus einem gemeinsamen Geheimnis der beiden Sitzungspartner berechnet, wie bspw. dem gemeinsamen Sitzungsschlüssel SKey oder einem anderen daraus abgeleiteten Geheimnis wie z.B. einem Wiederherstellungsschlüssel (Renegotiation Key): RID = Random-Hash[SKey]. Die Berechnung kann mittels einer kryptographischen Hash-Funktion, einem MAC (Message Authentication Code) oder einer anderen vergleichbaren nicht-invertierbaren Funktion erfolgen.

Die Randomisierung kann bspw. durch einen Sendefolgezähler SSC als sich von Sitzung zu Sitzung änderndes Element erreicht werden, so dass sich die Berechnung des randomisierten Attributs wie folgt darstellen lässt: RID = Hash[SSC, SKey].

Als zusätzliche Festlegung auf ein gegebenes Sitzungspartnerpaar kann bspw. die eindeutigen Terminal-Kennung in die Attributsberechnung mit einfließen: RID = Hash[SSC, SKey, TUID]. Die eindeutige Terminal-Kennung liegt dem ID-Token aus seinem Sitzungskontext bereits vor.

In dem Schritt S210 sendet der ID-Token 110 dem Terminal 120 neben dem verschlüsselten Sitzungskontext CKS auch das randomisierte Attribut RID zu, und das Terminal 120 speichert in dem Schritt S230 beides unter Zuordnung zu seinem Sitzungskontext TSK ab. Der ID-Token 110 speichert im Rahmen des Schrittes S220 das erzeugte randomisierte Attribut RID unter Zuordnung zu der (aus dem Sitzungskontext KSK extrahierten) eindeutigen Terminal-Kennung TUID ab und löscht dann den eigenen Sitzungskontext KSK sowie den erzeugten verschlüsselten Sitzungskontext CKS.

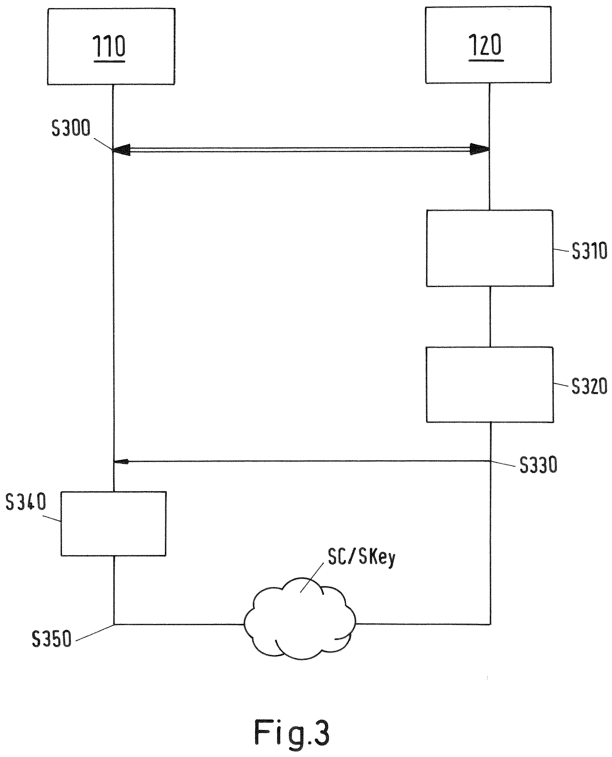

Zu einer Wiederherstellung einer (regulär) beendeten oder unterbrochenen/abgebrochenen Sitzung treten der ID-Token 110 und das Terminal 120 mittels ihrer jeweiligen Kommunikationsschnittstellen 112, 122 in Kontakt (Figur 3).

Ein erster Schritt S300 dient dem Anstoßen des gegenseitigen Identifizierungsprozesses.

Im Falle der Verwendung eines Token-Attributs KID in Form einer eindeutigen Token-Kennung KUID o.dgl. sendet der ID-Token 110 in dem Schritt S300 diese Kennung bzw. dieses Attribut als Anfrage an das Terminal 120.

Im Falle der Verwendung eines sitzungsspezifisch randomisierten Attributs RID als Token-Attribut KID gibt sich zunächst das Terminal 120 zu erkennen, indem es im Schritt S300 eine eindeutige Terminal-Kennung TUID an den ID-Token übermittelt. Der ID-Token 110 ermittelt anhand der empfangenen eindeutigen Terminal-Kennung TUID aus seinem Speicher 126 das zugehörige randomisierte Attribut RID und sendet dieses (als Anfrage) an das Terminal 120.

Damit ist der initiale Schritt S300 abgeschlossen, und das Terminal 120 prüft seinen Speicher 126 auf der Grundlage des empfangenen Attributs KID bzw. RID (Schritt S310). Findet sich in dem Speicher 106 des Terminals 120 ein zu dem empfangenen Attribut KID bzw. RID passender Eintrag in Form des verschlüsselten Sitzungskontextes CKS und des Terminal-Sitzungskontextes TSK, so wird dieser in einem Schritt S320 durch das Terminal 120 geladen. In einem nächsten Schritt S330 sendet das Terminal 120 den geladenen verschlüsselten Sitzungskontext CKS an den ID-Token 110, und der ID-Token 110 entschlüsselt den empfangenen verschlüsselten Sitzungskontext CKS mit Hilfe seines geheimen Schlüssels und erhält somit seinen eigenen Token-Sitzungskontext KSK zurück: KSK = Dec[CKS].

Beiden Sitzungspartnern liegen durch Laden der jeweiligen Sitzungskontexte nun alle für eine Wiederherstellung der Sitzung (bzw. des gesicherten Kommunikationskanals) notwendigen Daten vor, insbesondere der Sitzungsschlüssel SKey, so dass die Sitzung in einem Schritt S350 wiederhergestellt werden kann und anschließend Daten ausgetauscht werden können.

Das sitzungsspezifische randomisierte Attribut kann bspw. basierend auf der Verwendung eines Sendefolgezählers SSC erzeugt werden. In diesem Falle wird nach dem erfolgreichen Laden der Sitzungskontexte der Sendefolgezähler SSC inkrementiert und auf der Grundlage des inkrementierten Sendefolgezählers ein aktualisiertes randomisiertes Sitzungsattribut RID berechnet: RIDneu = Hash[SSC+i, SKey, TUID] .

Unter dem voranstehend beschriebenen Inkrementieren des Sendefolgezählers ist eine vereinbarte bzw. definierte schrittweise Änderung des Zählers zu verstehen. Der dem Fachmann an sich bekannte Sendefolgezähler wird bei der sicheren Kommunikation bei Eingang/Ausgang einer Nachricht üblicherweise um "1" erhöht. Zur (zusätzlichen) erfindungsgemäßen Nutzung eines (ohnehin vorhandenen) Sendefolgezählers für die Erzeugung eines randomisierten Attributs kann daher für die diesbezügliche Inkrementierung eine von "1" abweichende Vereinbarung getroffen werden, bspw. eine pseudozufällige Inkrementierung oder bspw. eine Inkrementierung um Vielfache von 256 (sollten im Rahmen einer Sitzung mehr als 256 Nachrichten ausgetauscht werden, so kann der Sendefolgezähler auf das nächste Vielfache von 256 gesetzt werden). Alternativ könnten selbst verständlich auch zwei unabhängige Sendefolgezähler vorgesehen sein. Sollte der Sendefolgezähler für die weitere Kommunikation nicht benötigt werden, könnte im Rahmen der vorliegenden Erfindung auch selbstverständlich auf eine Inkrementierung um "1" zurückgegriffen werden.

Zur Vermeidung von Replay-Attacken kann - wie bereits eingangs beschrieben - ein Zufalls- bzw. randomisiertes Element in den verschlüsselten Sitzungskontext eingebracht werden, bevor im Rahmen der etablierten gesicherten Sitzung sicherheitskritische Bereiche adressiert werden. Das randomisierte Element kann erfindungsgemäß ein Sendefolgezähler sein (d.h. ein aktueller Wert des Sendefolgezählers). Da der Speicher des ID-Tokens erfindungsgemäß möglichst wenig belegt werden soll, soll auch der Sendefolgezähler bzw. dessen aktueller Stand nicht gespeichert werden. Dies bedingt, dass der Sendefolgezähler für jede physische Sitzung neu initialisiert werden muss. Um den gewünschten Randomisierungseffekt zu erzielen, kann nun erfindungsgemäß die Initialisierung auf der Grundlage einer Zufallszahl erfolgen. Dabei kann es sich um eine bei einem der Sitzungpartner erzeugte und anschließend mit dem entsprechend anderen Sitzungpartner ausgetauschte Zufallszahl handeln. Alternativ und zur Erhöhung der Sicherheit kann es sich auch um eine von beiden Sitzungspartnern zum Teil erzeugte und anschließend zusammengesetzte Zufallszahl handeln. In diesem Falle würde die Zufallszahl aus einer auf dem ID-Token generierten ersten Zufallszahl und aus einer auf dem Terminal generierten zweiten Zufallszahl zusammengesetzt werden. Bspw. können von dem 16 Byte langen Sendefolgezähler 8 Byte Zufall von dem Terminal und 8 Byte Zufall von dem ID-Token verwendet werden. Beide Sitzungspartner verfügen anschließend über eine zusammengesetzte Zufallszahl und verwenden diese Zufallszahl zum Initialisieren ihres Sendefolgezählers. Der Sendefolgezähler wird anschließend zusammen mit dem aus dem Sitzungskontext entnommenen geheimen Schlüsselmaterial zur Initialisierung der für den wiederherzustellenden sicheren Kanal verwendeten kryptographischen Funktion verwendet.

Die Erfindung ermöglicht somit die "Wiederbenutzung" einer kryptographischen Sitzung zwischen einem Terminal und einem gegebenen ID-Token, wobei der ID-Token aufgrund der geringen Speicherbelastung durch Vermeiden einer Abspeicherung speicherintensiver Sitzungskontexte für eine Vielzahl unterschiedlicher Sitzungen verwendet werden kann (und sich somit z.B. zum Einsatz mit der Sicherungs- bzw. Zutrittsanlage eines größeren Firmengeländes mit einer Vielzahl von an die Sicherungsanlage angeschlossenen Türen eignet). Zur Vermeidung einer Verfolgbarkeit des ID-Tokens kann auf eine eindeutige Kennung des ID-Tokens verzichtet werden und es wird stattdessen ein sitzungsspezifisches randomisiertes Attribut erzeugt und bei beiden Sitzungspartnern hinterlegt. "Sitzungsspezifisch" in diesem Zusammenhang bedeutet, dass das randomisierte Attribut in jeder physischen Sitzung (also auch wiederhergestellten logischen Sitzung) neu berechnet wird. Das randomisierte Attribut ist daher für eine mögliche Nachverfolgung des ID-Tokens wertlos.

## Patentansprüche

1. Verfahren zur Authentisierung einer Zugangsberechtigung mittels eines Zugangskontrollsystems (100), wobei das Zugangskontrollsystem (100) ein Terminal (120) und einen ID-Token (110) umfasst, die zur Kommunikation miteinander über einen gesicherten Kanal in Form einer Sitzung ausgelegt sind, wobei für die Wiederherstellung der Sitzung zwischen Terminal (120) und ID-Token (110) ein durch den ID-Token (110) verschlüsselter Sitzungskontext, CKS, eines Sitzungskontextes, KSK, des ID-Tokens (110) der Sitzung erzeugt und in dem Terminal (120) zusammen mit einem zugeordneten Sitzungskontext, TSK, des Terminals (120) und einem Attribut, KID, des ID-Tokens (110) gespeichert wird, ohne dass der ID-Token (110) den Sitzungskontext, KSK, selbst speichert, wobei das Attribut, KID, eine eindeutige Token-Kennung, KUID, ist.

2. Verfahren nach Anspruch 1, bei dem zu einer Wiederherstellung der Sitzung zwischen dem Terminal (120) und dem ID-Token (110) das Terminal (120) auf Anfrage des ID-Tokens (110) den verschlüsselten Sitzungskontext CKS, ermittelt und an den ID-Token (110) sendet und den eigenen Sitzungskontext, TSK, ermittelt und lädt.

3. Verfahren zum Betreiben eines Terminals (120) eines Zugangskontrollsystems (100) zum Authentisieren einer Zugangsberechtigung, wobei das Terminal (120) zur Kommunikation mit einem ID-Token (110) in Form einer Sitzung und zum Empfang eines durch den ID-Token (110) verschlüsselten Sitzungskontextes, CKS, Z ines Sitzungskontextes, KSK, des ID-Tokens (110) der Sitzung ausgelegt ist, wobei das Terminal (120) den empfangenen verschlüsselten Sitzungskontext, CKS, zusammen mit dem eigenen Sitzungskontext, TSK, des Terminals (120) und einem Attribut KID, des ID-Tokens (110) speichert, wobei das Attribut, KID, eine eindeutige Token-Kennung, KUID, Z ist.

4. Verfahren nach Anspruch 3, bei dem zu einer Wiederherstellung einer Sitzung zwischen dem Terminal (120) und einem ID-Token (110) das Terminal (120) auf Anfrage des ID-Tokens (110) den zugehörigen verschlüsselten Sitzungskontext, CKS, ermittelt und an den ID-Token (110) sendet und den eigenen Sitzungskontext ermittelt und lädt.

5. Verfahren zum Betreiben eines ID-Tokens (110) zum Authentisieren einer Zugangsberechtigung , wobei der ID-Token (110) zur Kommunikation mit einem Terminal (120) eines Zugangskontrollsystems (100) in Form einer Sitzung ausgelegt ist, wobei der ID-Token (110) einen Schlüssel zur Verschlüsselung eines Sitzungskontextes, KSK, der Sitzung umfasst und den verschlüsselten Sitzungskontext, CKS, und ein Attribut, KID, des ID-Tokens (110) zur Speicherung an das Terminal (120) sendet, ohne den Sitzungskontext, KSK, selbst zu speichern, wobei das Attribut, KID, eine eindeutige Token-Kennung, KUID, ist.

6. Verfahren nach Anspruch 5, bei dem zu einer Wiederherstellung einer Sitzung zwischen dem Terminal (120) und dem ID-Token (110) der ID-Token (110) eine Anfrage an das Terminal (120) sendet und in Reaktion darauf von dem Terminal (120) den zugehörigen verschlüsselten Sitzungskontext, CKS, empfängt.

7. Verfahren nach einem der Ansprüche 1 bis 6, bei dem das Attribut, KID, in dem verschlüsselten Sitzungskontext, CKS, enthalten ist.

8. Verfahren nach einem der Ansprüche 1 bis 7, bei dem als Attribut, KID, ein sitzungsspezifisches randomisiertes Attribut, RID, erzeugt wird, das in dem Terminal (120) unter Zuordnung zu dem verschlüsselten Sitzungskontext, CKS, gespeichert wird, und in dem ID-Token (110) unter Zuordnung zu einer eindeutigen Terminal-Kennung, TUID, gespeichert wird.

9. Verfahren nach Anspruch 8, bei dem zu einer Wiederherstellung der Sitzung zwischen dem Terminal (120) und dem ID-Token (110) zunächst das Terminal (120) seine eindeutige Terminal-Kennung, TUID, an den ID-Token (110) sendet, der ID-Token (110) aus seinem Speicher (116) das zugehörige randomisierte Attribut, RID, ermittelt und dieses als Anfrage an das Terminal (120) sendet.

10. Verfahren nach einem der Ansprüche 1 bis 9, bei dem der verschlüsselte Sitzungskontext, CKS, ein randomisiertes Element umfasst.

11. Verfahren nach Anspruch 10, bei dem das randomisierte Element ein Sendefolgezähler ist, der zu Beginn jeder Sitzung neu initialisiert wird.

12. Verfahren nach Anspruch 11, bei dem die Initialisierung basierend auf einer Zufallszahl erfolgt, bspw. bei dem die Zufallszahl aus einer auf dem ID-Token generierten ersten Zufallszahl und aus einer auf dem Terminal generierten zweiten Zufallszahl zusammengesetzt wird.

13. Computerprogramm mit Programmcodemitteln, um alle Schritte eines Verfahrens nach einem der Ansprüche 3 bis 12 durchzuführen, wenn das Computerprogramm auf einem Terminal (120) eines Zugangskontrollsystems (100) bzw. einem ID-Token (110) bzw. einer entsprechenden Recheneinheit ausgeführt wird.

14. ID-Token (110) mit einer Kommunikationsschnittstelle, einem Prozessor und einem computerlesbaren Speichermedium, wobei in dem Speichermedium computerlesbare Instruktionen gespeichert sind, die bei Ausführung durch den Prozessor die Durchführung eines Verfahrens nach einem der Ansprüche 5 bis 12 bewirken.

15. Terminal (120) für ein Zugangskontrollsystem (100) zur Authentisierung einer Zugangsberechtigung, wobei das Terminal (120) zur Kommunikation mit einem ID-Token (110) über einen gesicherten Kanal ausgebildet ist und des weiteren einen Prozessor (124) und ein computerlesbares Speichermedium (126) umfasst, wobei in dem Speichermedium (126) computerlesbare Instruktionen gespeichert sind, die bei Ausführung durch den Prozessor (124) die Durchführung eines Verfahrens nach einem der Ansprüche 3, 4 oder 7 bis 12 bewirken.

## Claims

1. Method for authenticating access authorization by means of an access control system (100), wherein the access control system (100) comprises a terminal (120) and an ID token (110) that are designed to communicate with one another via a secure channel in the form of a session, wherein restoring the session between terminal (120) and ID token (110) involves a session context, CKS, encrypted by the ID token (110), of a session context, KSK, of the ID token (110) of the session being generated and being stored in the terminal (120) together with an associated session context, TSK, of the terminal (120) and an attribute, KID, of the ID token (110) without the ID token (110) storing the session context, KSK, itself, the attribute, KID, being a unique token identifier, KUID.

2. Method according to Claim 1, in which restoring the session between the terminal (120) and the ID token (110) involves the terminal (120) determining the encrypted session context, CKS, at the request of the ID token (110) and transmitting said encrypted session context to the ID token (110) and determining and loading its own session context, TSK.

3. Method for operating a terminal (120) of an access control system (100) for authenticating access authorization, wherein the terminal (120) is designed to communicate with an ID token (110) in the form of a session and to receive a session context, CKS, encrypted by the ID token (110), of a session context, KSK, of the ID token (110) of the session, wherein the terminal (120) stores the received encrypted session context, CKS, together with its own session context, TSK, of the terminal (120) and an attribute, KID, of the ID token (110), the attribute, KID, being a unique token identifier, KUID.

4. Method according to Claim 3, in which restoring a session between the terminal (120) and an ID token (110) involves the terminal (120) determining the associated encrypted session context, CKS, at the request of the ID token (110) and transmitting said encrypted session context to the ID token (110) and determining and loading its own session context.

5. Method for operating an ID token (110) for authenticating access authorization, wherein the ID token (110) is designed to communicate with a terminal (120) of an access control system (100) in the form of a session, wherein the ID token (110) comprises a key for encrypting a session context, KSK, of the session and transmits the encrypted session context, CKS, and an attribute, KID, of the ID token (110) to the terminal (120) for storage without storing the session context, KSK, itself, the attribute, KID, being a unique token identifier, KUID.

6. Method according to Claim 5, in which restoring a session between the terminal (120) and the ID token (110) involves the ID token (110) sending a request to the terminal (120) and, in response, receiving from the terminal (120) the associated encrypted session context, CKS.

7. Method according to one of Claims 1 to 6, in which the attribute, KID, is contained in the encrypted session context, CKS.

8. Method according to one of Claims 1 to 7, in which the attribute, KID, generated is a session-specific randomized attribute, RID, that is stored in the terminal (120) in association with the encrypted session context, CKS, and is stored in the ID token (110) in association with a unique terminal identifier, TUID.

9. Method according to Claim 8, in which restoring the session between the terminal (120) and the ID token (110) involves the terminal (120) first transmitting its unique terminal identifier, TUID, to the ID token (110), the ID token (110) determining the associated randomized attribute, RID, from its memory (116) and transmitting said randomized attribute as a request to the terminal (120).

10. Method according to one of Claims 1 to 9, in which the encrypted session context, CKS, comprises a randomized element.

11. Method according to Claim 10, in which the randomized element is a transmission sequence counter that is reinitialized at the beginning of every session.

12. Method according to Claim 11, in which the initialization is effected on the basis of a random number, for example in which the random number is compiled from a first random number generated on the ID token and from a second random number generated on the terminal.

13. Computer program having program code means in order to perform all the steps of a method according to one of Claims 3 to 12 when the computer program is executed on a terminal (120) of an access control system (100) or on an ID token (110) or on a corresponding computing unit.

14. ID token (110) having a communication interface, a processor and a computer-readable storage medium, wherein the storage medium stores computer-readable instructions that, when executed by the processor, prompt the performance of a method according to one of Claims 5 to 12.

15. Terminal (120) for an access control system (100) for authenticating access authorization, wherein the terminal (120) is designed to communicate with an ID token (110) via a secure channel and moreover comprises a processor (124) and a computer-readable storage medium (126), wherein the storage medium (126) stores computer-readable instructions that, when executed by the processor (124), prompt the performance of a method according to one of Claims 3, 4 or 7 to 12.

## Revendications

1. Procédé d'authentification d'une autorisation d'accès au moyen d'un système de contrôle d'accès (100), le système de contrôle d'accès (100) comprenant un terminal (120) et un jeton d'identification (110) qui sont conçus pour communiquer ensemble par un canal sécurisé sous la forme d'une session, dans lequel, pour rétablir la session entre le terminal (120) et le jeton d'identification (110), un contexte de session, CKS, crypté par le jeton d'identification (110), d'un contexte de session, KSK, du jeton d'identification (110) de la session est généré et stocké sur le terminal (120) conjointement avec un contexte de session associé, TSK, du terminal (120), et un attribut, KID, du jeton d'identification (110) sans que le jeton d'identification (110) ne stocke le contexte de session, KSK, en tant que tel, l'attribut, KID, étant un identifiant de jeton univoque, KUID.

2. Procédé selon la revendication 1, dans lequel, pour rétablir la session entre le terminal (120) et le jeton d'identification (110), le terminal (120) établit à la demande du jeton d'identification (110) le contexte de session crypté, CKS, et l'envoie au jeton d'identification (110), et établit et charge son propre contexte de session, TSK.

3. Procédé d'exploitation d'un terminal (120) d'un système de contrôle d'accès (100) pour authentifier une autorisation d'accès, le terminal (120) étant conçu pour communiquer avec un jeton d'identification (110) sous la forme d'une session et pour recevoir un contexte de session, CKS, crypté par le jeton d'identification (110), d'un contexte de session, KSK, du jeton d'identification (110) de la session, le terminal (120) stockant le contexte de session crypté, CKS, reçu conjointement avec son propre contexte de session, TSK, du terminal (120) et un attribut, KID, du jeton d'identification (110), l'attribut, KID, étant un identifiant de jeton univoque, KUID.

4. Procédé selon la revendication 3, dans lequel, pour rétablir une session entre le terminal (120) et un jeton d'identification (110), le terminal (120) établit à la demande du jeton d'identification (110) le contexte de session crypté, CKS, associé et l'envoie au jeton d'identification (110), et établit et charge son propre contexte de session.

5. Procédé d'exploitation d'un jeton d'identification (110) pour authentifier une autorisation d'accès, le jeton d'identification (110) étant conçu pour communiquer avec un terminal (120) d'un système de contrôle d'accès (100) sous la forme d'une session, le jeton d'identification (110) comprenant une clé pour crypter un contexte de session, KSK, de la session, et envoie le contexte de session crypte, CKS, et un attribut, KID, du jeton d'identification (110) pour le stockage au terminal (120) sans stocker le contexte de session, KSK, en tant que tel, l'attribut, KID, étant un identifiant de jeton univoque, KUID.

6. Procédé selon la revendication 5, dans lequel, pour rétablir une session entre le terminal (120) et le jeton d'identification (110), le jeton d'identification (110) envoie une demande au terminal (120) et, en réponse, reçoit du terminal (120) le contexte de session crypté, CKS, associé.

7. Procédé selon l'une quelconque des revendications 1 à 6, dans lequel l'attribut, KID, est contenu dans le contexte de session crypté, CKS.

8. Procédé selon l'une quelconque des revendications 1 à 7, dans lequel comme attribut, KID, un attribut randomisé spécifique à la session, RID, est généré qui est stocké sur le terminal (120) en association avec le contexte de session crypté, CKS, et est stocké sur le jeton d'identification (110) en association avec un identifiant de terminal univoque, TUID.

9. Procédé selon la revendication 8, dans lequel, pour rétablir la session entre le terminal (120) et le jeton d'identification (110), d'abord le terminal (120) envoie son identifiant de terminal univoque, TUID, au jeton d'identification (110), le jeton d'identification (110) établit à partir de sa mémoire (116) l'attribut randomisé, RID, associé et l'envoie au terminal (120) sous forme de demande.

10. Procédé selon l'une quelconque des revendications 1 à 9, dans lequel le contexte de session crypté, CKS, comprend un élément randomisé.

11. Procédé selon la revendication 10, dans lequel l'élément randomisé est un compteur de séquence d'envoi qui est réinitialisé au début de chaque session.

12. Procédé selon la revendication 11, dans lequel l'initialisation est effectuée sur la base d'un nombre aléatoire, par exemple dans lequel le nombre aléatoire est composé d'un premier nombre aléatoire généré sur le jeton d'identification et d'un deuxième nombre aléatoire généré sur le terminal.

13. Programme informatique comprenant des moyens de code programme pour effectuer toutes les étapes d'un procédé selon l'une quelconque des revendications 3 à 12 si le programme informatique est effectué sur un terminal (120) d'un système de contrôle d'accès (100) ou un jeton d'identification (110) ou une unité de calcul correspondante.

14. Jeton d'identification (110) comprenant une interface de communication, un processeur et un support de stockage lisible par ordinateur, dans lequel des instructions lisibles par ordinateur sont stockées sur le support de stockage qui, lorsqu'elles sont exécutées par le processeur, provoquent l'exécution d'un procédé selon l'une quelconque des revendications 5 à 12.

15. Terminal (120) pour un système de contrôle d'accès (100) pour authentifier une autorisation d'accès,
le terminal (120) étant conçu pour communiquer avec un jeton d'identification (110) par un canal sécurisé et comprenant en outre un processeur (124) et un support de stockage (126) lisible par ordinateur,
des instructions lisibles par ordinateur étant stockées sur le support de stockage (126) qui, lorsqu'elles sont exécutées par le processeur (124), provoque l'exécution d'un procédé selon l'une quelconque des revendications 3, 4 ou 7 à 12.
